## Europäisches Patentamt
## European Patent Office
## Office européen des brevets

(19)

(11) Veröffentlichungsnummer: **0 204 690**
**B1**

(12) **EUROPÄISCHE PATENTSCHRIFT**

(45) Veröffentlichungstag der Patentschrift:
02.11.89

(51) Int. Cl.⁴: **B60L 9/30**

(21) Anmeldenummer: **86890155.4**

(22) Anmeldetag: **27.05.86**

(54) Einspeiseschaltung.

(30) Priorität: **31.05.85 AT 1662/85**

(43) Veröffentlichungstag der Anmeldung:
**10.12.86 Patentblatt 86/50**

(45) Bekanntmachung des Hinweises auf die Patenterteilung:
**02.11.89 Patentblatt 89/44**

(84) Benannte Vertragsstaaten:
**BE CH DE FR GB IT LI SE**

(56) Entgegenhaltungen:
**DE-A- 3 243 337**
**DE-A- 3 301 496**
**DE-B- 1 264 595**

**BULLETIN SEV/VSE, Band 67, Nr. 14, 17. Juli 1976,
Seiten 725-730; A. JÄGER et al.: "Stand der
Entwicklung von elektrischen Traktionsausrüstungen
für Wechsel- und Gleichstrombahnen"**

(73) Patentinhaber: **ELIN-UNION Aktiengesellschaft für
elektrische Industrie, Penzinger Strasse 76,
A-1141 Wien(AT)**

(72) Erfinder: **Schiftner, Karl, Dr., Argentinierstrasse 63/3/9,
A-1040 Wien(AT)**
Erfinder: **Kämmer, Karl, Kuntnerstrasse 72/7/3/6,
A-3032 Eichgraben(AT)**

(74) Vertreter: **Krause, Peter, Penzinger Strasse 76,
A-1141 Wien(AT)**

## Beschreibung

Die Erfindung betrifft eine Einspeiseschaltung für den universellen Betrieb elektrischer Triebfahrzeuge an Wechsel- oder Gleichspannungssystemen, wobei bei Wechselspannungssystemen ein einem Einphasen-Netztransformator nachgeschalteter Netzstromrichter und bei Gleichspannungssystemen ein einem Eingangs-Netzfilter nachgeschaltete Gleichstromsteller-Glättungsdrossel-Einheit die Last speist.

Aus der DE-OS 3 243 337 ist eine Schaltung der eingangs genannten Art bekannt. Mit dieser Schaltung wird die ungünstige Oberschwingungsbelastung des Speisenetzes bei Sektorsteuerung vermieden. Hier wird ein Pulsstromrichter, der im Wechselspannungsbetrieb beliebig oft pro Halbschwingung schalten kann, verwendet, der in Gleichspannungsbetrieb als Gleichstromsteller arbeitet. Dieser Typ benötigt auch im Wechselspannungsbetrieb ein Netzfilter, um die Kommutierungsspannungsspitzen vom Speisenetz fernzuhalten.

Die Schaltung eignet sich sowohl als Netzstromrichter für Stromzwischenkreisumrichter bei Gleich- und Wechselspannungsnetzen als auch allgemein als Stellglied für Gleichstromlasten. Die Schaltung ist netzspeisefähig, wobei bei gleichbleibender Stromrichtung in der Last die Spannung die Vorzeichen wechselt.

Es ist auch eine Schaltung aus der AT-PS (378 516) bekannt, der der Netztransformator bei Anwendung der Folgesteuerung mehrere Sekundärwicklungen aufweist. Außerdem wird durch die verwendete Sektorsteuerung in einer der beiden Brücken der Folgesteuerung die Oberschwingungsbelastung des Speisenetzes erhöht.

Aufgabe der Erfindung ist es, eine Einspeiseschaltung der eingangs genannten Art zu schaffen, die einerseits die Nachteile der bekannten Schaltung vermeidet und andererseits für beide Spannungssysteme geeignet ist und volumen- und gewichtsmäßig Vorteile bei den gegebenen Raumverhältnissen eines Triebfahrzeuges bringt.

Die erfindungsgemäße Einspeiseschaltung ist dadurch gekennzeichnet, daß der Netzstromrichter ein an sich bekannter aus zwei Halbpolen gebildeter Vierquadranten-Netzstromrichter ist, daß bei Gleichstrombetrieb die Primärwicklung des Einphasen-Netztransformators durch einen Schalter kurzgeschlossen und die Sekundärwicklung über den Gleichstromsteller als Glättungsdrossel zwischen den Eingangs-Netzfilter und einen Zwischenkreiskondensator eines Spannungszwischenkreisumrichters geschaltet ist.

Der Vorteil der Erfindung liegt darin, daß bei einem systemüberschreitenden Verkehr, egal welches System vorliegt, der Fahrbetrieb ohne Wechsel der Traktionsmittel aufrechterhalten werden kann. Zufolge des über den Vierquadranten-Netzstromrichter nahezu sinusförmig führbaren Netzstromes wird die Oberschwingungsbelastung bei Wechselspannungsbetrieb im Speisenetz klein gehalten und der Leistungsfaktor wird nahezu eins. Im Wechselspannungsbetrieb ist diese Schaltung netzbremsfähig.

Nach einer weiteren Ausgestaltung der Erfindung ist der Gleichstromsteller als Tiefsetzsteller ausgebildet und im Gleichspannungsbetrieb sind die Sekundärwicklung zwischen dem Gleichstromsteller und dem positiven Pol des Zwischenkreiskondensators und der Zwischenkreiskondensator auf Masse geschaltet. Damit wird Volumen und Gewicht einer eigenen Glättungsdrossel eingespart.

Gemäß einem weiteren Merkmal der Erfindung ist als Gleichstromsteller ein Halbpol des Vierquadranten-Netzstromrichters der Sekundärwicklung vorgeschaltet und sind der positive Pol des Halbpoles vom positiven Pol des Zwischenkreiskondensators getrennt und an den positiven Pol des Kondensators des Eingangs-Netzfilters und der negative Pol des Halbpoles an Masse geschaltet. Zusätzlich zur Einsparung der Glättungsdrossel wird hier ein Halbpol des Vierquadranten-Netzstromrichters im Gleichspannungsbetrieb einer zweiten Verwendung als Gleichstromsteller zugeführt. Diese Ausbildungsform ist im Gleich- und Wechselspannungssystem voll netzbremsfähig.

Nach einem besonderen Merkmal der Erfindung ist der als Gleichstromsteller verwendete Halbpol als Hochsetzsteller ausgebildet und sind im Gleichspannungsbetrieb zwischen dem positiven Pol des Kondensators des Eingangs-Netzfilters und dem Halbpol die Sekundärrichtung und der negative Pol des Zwischenkreiskondensators an Masse geschaltet. Wie bei der vorangegangenen Ausbildungsform wird auch hier eine zusätzlich vorgesehene Glättungsdrossel eingespart und ein Halbpol des Vierquadranten-Netzstromrichters doppelt verwendet. Sie ist in gleicher Weise netzfreundlich und in beiden Systemen voll netzbremsfähig.

Die Erfindung wird an Hand von Ausführungsbeispielen, die in den Zeichnungen dargestellt sind, näher erläutert. Fig. 1 zeigt ein Prinzipschaltbild, Fig.2 die Schaltung für Gleichspannungsspeisenetz 3 kV und Wechselspannungssysteme 25 kV/50 Hz bzw. 15 kV/16 2/3 Hz, Fig.3 die Schaltung für Gleichspannungsspeisenetz 1.5 kV (bzw. 3 kV) und Wechselspannungssysteme 25 kV/50 Hz bzw. 15 kV/16 2/3 Hz und Fig. 4 die Schaltung für Gleichspannungsspeisenetze kleiner 1.5 kV und Wechselspannungssysteme 25 kV/50 Hz bzw. 15 kV/16 2/3 Hz.

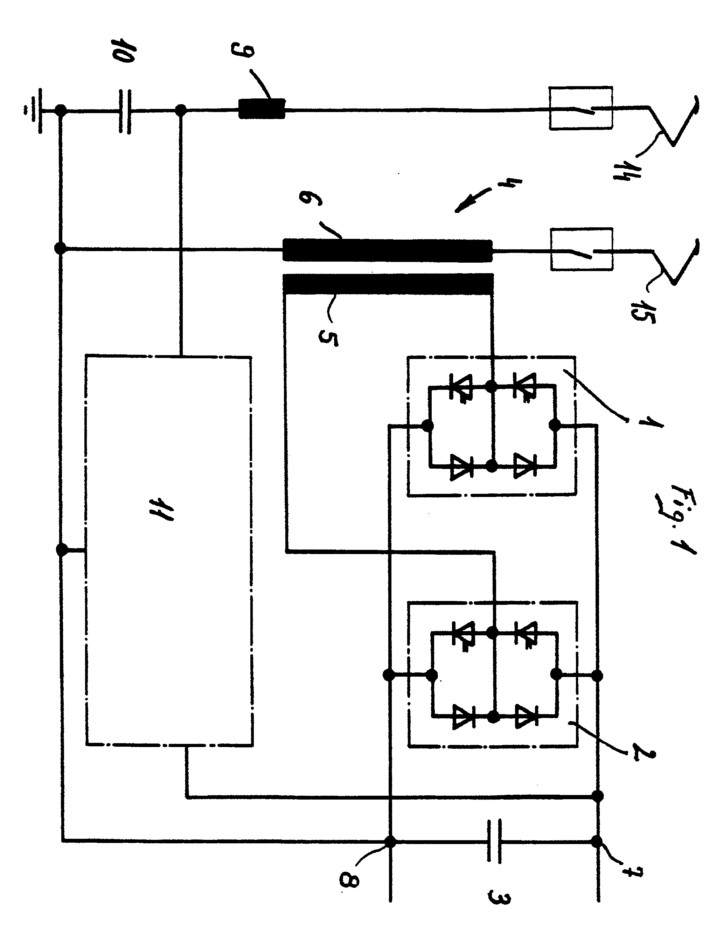

Gemäß der Fig.1 ist die Funktionsweise der Einspeise- Stromrichterschaltung für den Gleichspannungszwischenkreis dargestellt, der aus den Vierquadranten-Netzstromrichtern 1, 2, dem Zwischenkreiskondensator 3 und dem nicht dargestellten Maschinenstromrichter besteht. Die Einspeisung erfolgt über den Gleichspannungsabnehmer 14, bzw. Wechselspannungsabnehmer 15.

Die Stromrichterbausteine des im Wechselstrombetrieb aktivierten Vierquadranten-Netzstromrichters bestehen aus elektronischen Schaltern, das sind in Serie geschaltete löschbare Thyristoren, Thyristoren mit Löscheinrichtung nach der Mc Murray-Schaltung oder Transistoren mit anti-parallel angeordneten Dioden.

Mit zwei Bauelementen einer derartigen Anordnung im folgenden kurz Halbpole 1,2, genannt, kann die Gleichspannung des Zwischenkreises in positiver oder negativer Polarität an die Sekundärwicklung 5 des Einphasen-Netztransformators 4 gelegt werden. Außerdem ist Spannung "Null" möglich, wenn beide Schalter die Anschlüsse der Sekundärwicklung 5 an den positiven 7 oder an den negativen Pol 8 des Zwischenkreiskondensators 3 schalten. Durch Verändern der Verweildauer der elektronischen Schalter in den beiden möglichen Schaltstellungen kann der Mittelwert der zwischen den Anschlüssen der Sekundärwicklung 5 wirksamen Spannung zwischen einem negativen und einem positiven Maximalwert, der nahezu der Gleichspannung am Zwischenkreiskondensator 3 entspricht, kontinuierlich veränderlich verstellt werden. Mit dieser Anordnung ist es bei schneller Aufeinanderfolge der einzelnen Umschaltung möglich, nahezu sinusförmige Ströme mit beliebiger Grundschwingungsamplitude und Frequenz einzustellen und deren Phasenlage bezüglich der Netzspannung vorzugeben. Speziell ist der Grundschwingungsleistungsfaktor cos φ = 1 möglich, der Gesamtleistungsfaktor λ liegt wegen der geringen Oberschwingungsbelastung des Speisenetzes nur geringfügig unter 1. Die Schaltung ist in der Lage, beide Energieflußrichtungen unter Einhaltung der genannten günstigen Netzbedingungen vorzugeben. Bei Gleichspannungsbetrieb arbeitet eine von einem Eingangs-Netzfilter 9, 10, gespeiste Gleichstromsteller-Glättungsdrossel-Baueinheit 11 auf den Zwischenkreiskondensator 3. Der Wechselstromteil ist deaktiviert. Diese Anordnung ist je nach Ausbildungsform nur für den Energiebezug oder bei Umschaltung oder Doppelinstrumentierung auch für Netzrückspeisung geeignet.

Im folgenden wird nur der Energiebezug vom Speisenetz beschrieben. Bei Netzrückspeisung sind die Funktionen Tiefsetz- und Hochsetzsteller des Gleichstromstellers zu vertauschen.

Es sind zwei Ausbildungsformen nach dem Verhältnis der Größe der Spannung am Netzfilterkondensator 10 und am Zwischenkreiskondensator 3 zu unterscheiden:

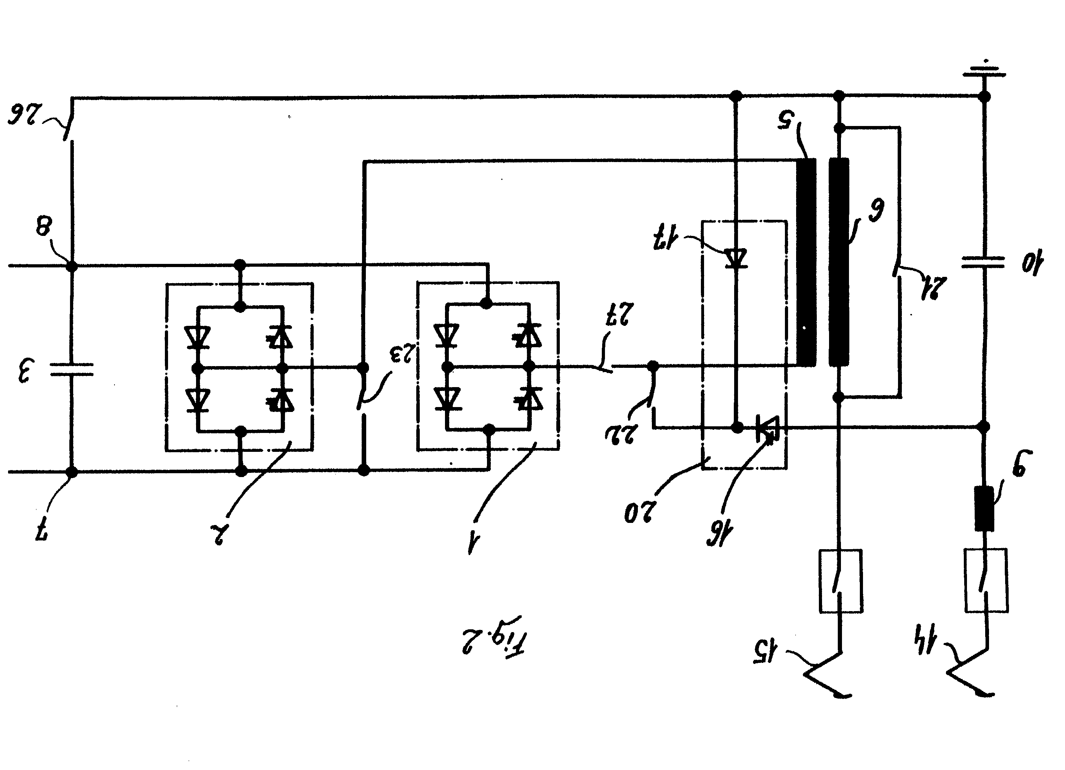

Wenn die Spannung am Zwischenkreiskondensator 3 kleiner als die Spannung am Kondensator 10 ist, speist der Gleichstromstller als Tiefsetzsteller (gemäß Fig.2)über eine Gleichstromglättungsdrossel in den Zwischenkreis ein.

Der löschbare Thyristorschalter 16 (unter Heranziehung der Fig.2) legt die als Gleichstromglättungsdrossel verwendete Sekundärwicklung 5 an die Differenzspannung der beiden Kondensatorspannungen und lädt diese auf. Nach dem Löschvorgang wird die Glättungsdrossel 5 über die Freilaufdiode 17 an den positiven Pol 7 des Zwischenkreiskondensators 3 geschaltet und gibt einen Teil der gespeicherten Energie an diesen ab. Die Ein- und Ausschaltezeiten des Thyristorschalters 16 werden so vorgegeben, daß die positiven und negativen Spannungszeitflächen an der Glättungsdrossel 5 gleich sind.

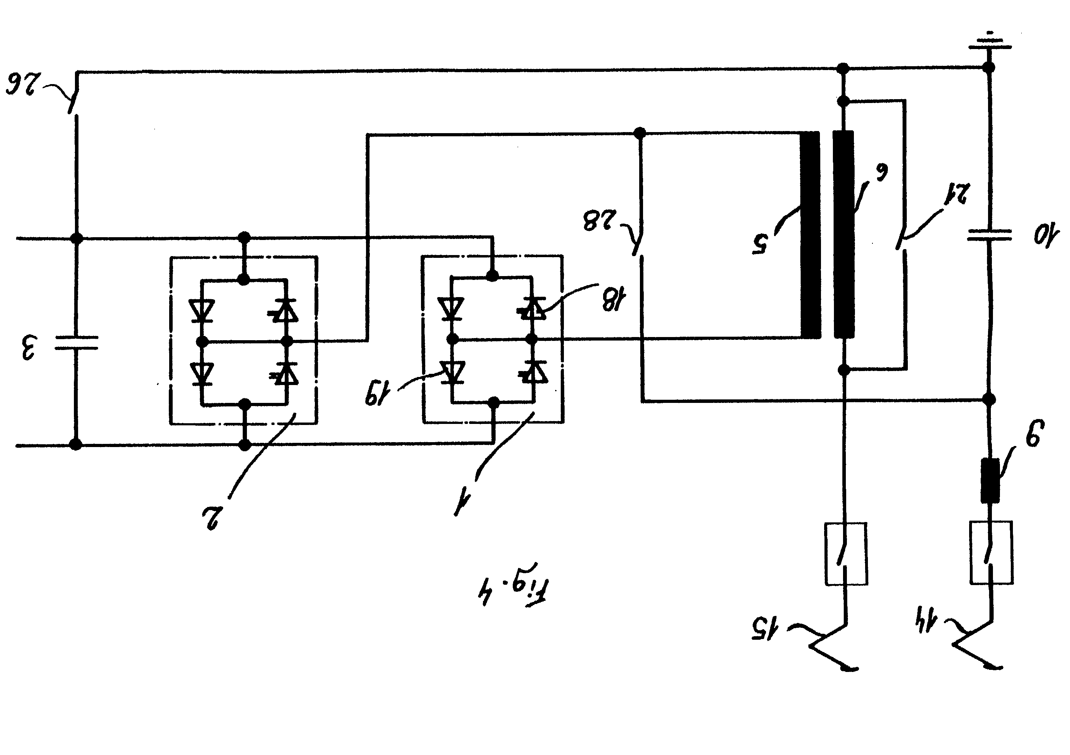

Wenn die Spannung (unter Heranziehung der Fig.4 ) am Zwischenkreiskondensator 3 größer als die Spannung am Kondensator 10 ist, ist eine Schaltungsanordnung vorzusehen in der der als Gleichstromsteller verwendete Halbpol 1 als Hochsetzsteller beim Energiebezug vom Speisenetz arbeitet. Die zwischen dem positiven Pol des Kondensators 10 und dem Eingang des Gleichstromstellers angeordnete Gleichstromglättungsdrossel 5 wird beim Zünden des Thyristorschalters 18 an die Spannung des Kondensators 10 gelegt und erregt. Nach dem Löschen des Thyristorschalters 18 wird die Glättungsdrossel 5 über die Freilaufdiode 19 des Gleichstromstellers an den positiven Pol des Zwischenkreiskondensators 3 durchgeschaltet. Die Glättungsdrossel 5 liegt an der Differenzspannung aus Zwischenkreisspannung und der Spannung am Kondensator 10, wird entregt und gibt Energie an den Zwischenkreiskondensator 3 ab.

Wenn der Gleichstromsteller als Halbpol ausgebildet ist, dann kann die Energierichtung ohne Systemumschaltung umgekehrt werden, der Halbpol arbeitet dann als Tiefsetzsteller.

Nachstehend werden die Funktionenen der Schaltungen im einzelnen erläutert: Die Schaltung gemäß Fig.2:

Gleichspannungsbetrieb:
Die über das Eingangs-Netzfilter 9,10 geglättete Spannung wird dem Gleichstromsteller 20 zugeführt. Über den Gleichstromsteller 20 wird die Primärspannung auf die Sekundärwicklung 5 geschaltet. Die mit dem Schalter 21 kurzgeschlossene Primärwicklung 6 garantiert, daß die Streuinduktivitäten in der Sekundärwicklung 5 wirksam werden und so die Sekundärwicklung 5 als Drossel verwendet werden kann. Der Gleichstromsteller 20 schaltet die Spannung am Kondensator 10 über das Schütz 22, die Sekundärwicklung 5 und das Schütz 23 auf den Z-wischenkreiskondensator 3. Der Gleichstromsteller 20 wirkt in diesem Zusammenhang als Tiefsetzsteller. Die Halbpole 1, 2,sind im Gleichspannungsbetrieb außer Funktion.

Wechselspannungsbetrieb:
Bei Anspeisung mit Wechselspannung erfolgt der Betrieb über die beiden Halbpole 1,2, als Vierquadranten-Netzstromrichter. Der Gleichstromsteller 20 ist im Wechselspannungsbetrieb außer Funktion.

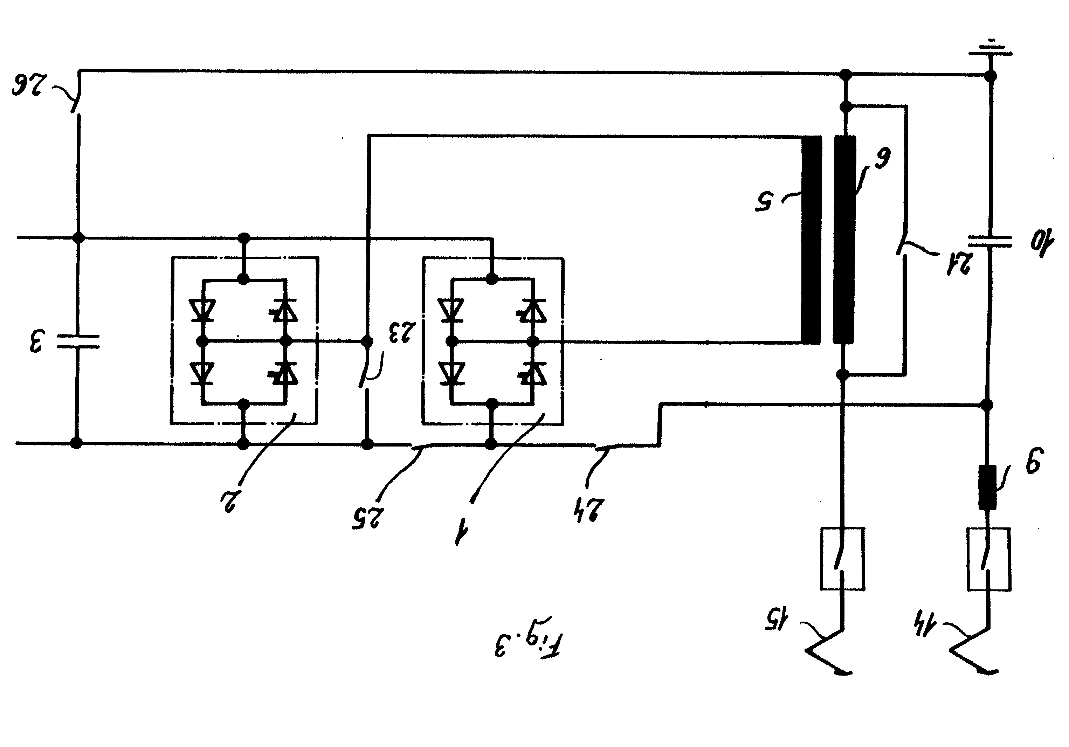

Schaltung gemäß Fig.3
Gleichspannungsbetrieb:
Die über das Eingangs-Netzfilter 9,10 geglättete Spannung wird über das Schütz 24 dem Halbpol 1 zugeführt. Über diesen Halbpol 1 wird die Spannung des Kondensators 10 auf die Sekundärwicklung 5 geschaltet. Die mit dem Schalter 21 kurzgeschlossene Primärwicklung 6 garantiert, daß die Streuinduktivitäten in der Sekundärwicklung 5 wirksam werden und so die Sekundärwicklung 5 als Drossel verwendet werden kann. Damit wird die Spannung des Kondensators 10 über den Halbpol 1 und der Sekundärwicklung 5 über Schütz 23 auf den Zwischenkreis geschaltet. Der Halbpol 1 wirkt in diesem Zusammenhang als Tiefsetzsteller. Beim Zurückspeisen in das Netz wird durch Aufladen der Sekundärwicklung 5 aus dem Zwischenkreis über den Halbpol 1 und nachfolgendes Umschalten auf die Spannung des Kondensators 10 die Energie in das Netz geladen.Im Rückspeisebetrieb arbeitet der Halbpol 1 als Hochsetzsteller. Der Halbpol 2 ist im Gleichspannungsbetrieb außer Funktion. Der Schalter 25 ist offen und der Schalter 26 geschlossen.

Wechselspannungsbetrieb:

Bei Anspeisung mit Wechselspannung erfolgt der Betrieb der beiden Halbpole 1, 2, als Vierquadranten-Netzstromrichter.

Schaltung gemäß Fig.4:

Gleichstrombetrieb:

Die über das Eingangsnetzfilter 9,10 geglättete Spannung wird der Sekundärwicklung 5 über das Schütz 28 zugeführt. Die mit dem Schalter 21 kurzgeschlossene Primärwicklung 6 garantiert, daß die Streuinduktivitäten des Trafos in der Sekundärwicklung 5 wirksam werden und so die Sekundärwicklung 5 als Drossel verwendet werden kann. Mit dem Halbpol 1 wird nun die Spannung über die Sekundärwicklung 5 über den Schütz 26 auf Masse geschaltet, die Sekundärwicklung 5 aufgeladen und nach Umschalten des Halbpols 1 die Energie in den Zwischenkreiskondensator 3 geladen. Der Halbpol 1 wirkt im Zusammenhang mit der Sekundärwicklung 5 als Hochsetzsteller.

Beim Zurückspeisen in das Netz wird der Halbpol 1 ohne mechanische Umschaltelemente als Tiefsetzsteller verwendet. Der Halbpol 2 ist außer Funktion.

Wechselspannungsbetrieb:

Bei Anspeisung mit Wechselspannung erfolgt der Betrieb bei den Halbpolen 1, 2 als Vierquadranten-Netzstromrichter.

## Patentansprüche

1. Einspeiseschaltung für den universellen Betrieb elektrischer Triebfahrzeuge an Wechsel- oder Gleichspannungssystemen, wobei bei Wechselspannungssystemen ein einem Einphasen-Netztransformator nachgeschalteter Netzstromrichter und bei Gleichspannungssystemen ein einem Eingangs-Netzfilter nachgeschaltete Gleichstromsteller-Glättungsdrossel-Einheit die Last speist, dadurch gekennzeichnet, daß der Netzstromrichter ein an sich bekannter aus zwei Halbpolen (1, 2) gebildeter Vierquadranten-Netzstromrichter ist, daß bei Gleichstrombetrieb die Primärwicklung (6) des Einphasen-Netztransformators (4) durch einen Schalter (21) kurzgeschlossen und die Sekundärwicklung (5) über den Gleichstromsteller (1 bzw. 20) als Glättungsdrossel zwischen den Eingangs-Netzfilter (9, 10) und einen Zwischenkreiskondensator (3) eines Spannungszwischenkreisumrichters geschaltet ist.

2. Einspeiseschaltung nach Anspruch 1, dadurch gekennzeichnet, daß der Gleichstromsteller (20) als Tiefsetzsteller ausgebildet ist und daß im Gleichspannungsbetrieb die Sekundärwicklung (5) zwischen dem Gleichstromsteller (20) und dem positiven Pol (7) des Zwischenkreiskondensators (3) und daß der Zwischenkreiskondensator (3) auf Masse geschaltet sind.

3. Einspeiseschaltung nach Anspruch 1, dadurch gekennzeichnet, daß als Gleichstromsteller (20) ein Halbpol (1) des Vierquadranten-Netzstromrichters der Sekundärwicklung (5) vorgeschaltet ist und der positive Pol des Halbpoles vom positiven Pol des Zwischenkreiskondensators (3) getrennt ist und an den positiven Pol des Kondensators (3) des Eingangs-Netzfilters (9, 10) und der negative Pol des Halbpoles (1) an Masse geschaltet sind.

4. Einspeiseschaltung nach Anspruch 1, dadurch gekennzeichnet, daß der als Gleichstromsteller verwendete Halbpol (1) als Hochsetzsteller ausgebildet ist und im Gleichspannungsbetrieb zwischen dem positiven Pol des Kondensators (10) des Eingangs-Netzfilters (9, 10) und dem Halbpol (1) die Sekundärwicklung (5) und der negative Pol des Zwischenkreiskondensators (3) an Masse geschaltet sind.

## Claims

1. Supply circuit for the universal drive of electric vehicles having alternate or direct current systems, wherein the load is supplied by a mains current converter coupled at the outlet side of a single phase mains transformer with alternate current systems, and by a dc controller smoothing inductor unit coupled at the outlet side of an input power filter with direct current systems, characterised in that the mains transformer is a four quadrant mains transformer known per se comprising two half poles (1, 2), in that the primary winding (6) of the single phase mains transformer (4) is short circuited by a switch (21) and that the secondary winding (5) is switched as a smoothing inductor across the dc controller (1 or 20) between the input power filter (9, 10) and an intermediate circuit capacitor (3) of an intermediate voltage.

2. Supply circuit according to claim 1, characterised in that the dc controller (20) is formed as a step-down converter and that, in the direct current mode, the secondary winding (5), between the dc controller (20) and the positive pole (7) of the intermediate circuit capacitor (3), and the intermediate circuit capacitor are grounded.

3. Supply circuit according to claim 1, characterised in that, as a dc controller (20), a half pole (1) of the four quadrant mains transformer precedes the secondary winding (5), and that the positive pole of the half pole is separated from the positive pole of the intermediate circuit capacitor (3) and the positive pole of the capacitor (10) of the input power filter (9, 10) and the negative pole of the half pole (1) are grounded.

4. Supply circuit according to claim 1 characterised in that the half pole (1) used as a dc controller is formed as a step-up converter and, in the direct current mode, between the positive pole of the capacitor (10) of the input power filter (9, 10), the half pole (1) of the secondary winding (5) and the negative pole of the intermediate circuit capacitor (3) are grounded.

## Revendications

1. Circuit d'alimentation pour le service universel de véhicules tracteurs électriques dans des systèmes à courant alternatif ou continu, dans lequel, dans le cas de systèmes à courant alternatif, un redresseur de courant du réseau intercalé en aval d'un transformateur de réseau monophasé et, dans le cas de systèmes à tension continue, une unité régleur de courant continu-bobine de lissage placée en aval d'un filtre de réseau d'entrée, alimentent la charge, caractérisé en ce que le redresseur du courant du réseau est un redresseur de courant à quatre quadrants, composé de deux demi-pôles (1, 2), que, dans le cas du travail en courant continu, l'enroulement primaire (6) du transformateur du réseau monophasé (4) est court-circuité par un interrupteur (21) et l'enroulement secondaire (5) par l'intermédiaire d'un régleur de courant continu (1 ou 20) servant de bobine de lissage entre le filtre de réseau d'entrée et un condensateur (3) de circuit intermédiaire appartenant à un redresseur de tension indirect.

2. Circuit d'alimentation selon la revendication 1, caractérisé en ce que le régleur de courant continu (20) est constitué par un abaisseur de tension et en ce que, dans le travail en tension continue, l'enroulement secondaire (5) est intercalé entre le régleur de courant continu (20) et le pôle positif (7) du condensateur de circuit intermédiaire (3) et en ce que le condensateur de circuit intermédiaire (3) est connecté à la masse.

3. Circuit d'alimentation selon la revendication 1, caractérisé en ce qu'un demi-pôle (1) appartenant au redresseur de courant du réseau à quatre quadrants est connecté en qualité de régleur de courant continu (20) en amont de l'enroulement secondaire (3), en ce que le pôle positif du demi-pôle est séparé du pôle positif du condensateur de circuit intermédiaire (3), et en ce que le pôle positif du condensateur (3) du filtre de réseau d'entrée (9, 10) et le pôle négatif du demi-pôle (1) sont connectés à la masse.

4. Circuit d'alimentation selon la revendication 1, caractérisé en ce que le demi-pôle (1) utilisé comme régleur de courant continu est constitué par un transformateur élévateur de tension et que, dans le travail en courant continu, l'enroulement secondaire (5) est connecté entre le pôle positif du condensateur (10) du filtre de réseau d'entrée (9, 10) et le demi-pôle (1), tandis que le pôle négatif du condensateur de circuit intermédiaire (3) est connecté à la masse.

Fig. 1

Fig. 2

Fig. 3

Fig. 4